# EUROPEAN PATENT APPLICATION

(11) **EP 2 058 991 A1**
(43) Date of publication of application: **13.05.2009**
(21) Application number: 07801073.3
(22) Date of filing: 10.09.2007
(51) Int. Cl.: H04L 12/58, H04Q 7/22

(54) **METHOD, SYSTEM AND APPARATUS FOR IMPLEMENTING THE INTERWORKING OF MESSAGES**

(30) Priority: 21.09.2006 CN 200610127292
(71) Applicant: Huawei Technologies Co., Ltd., Longgang District, Shenzhen Guangdong 518129 (CN)
(72) Inventor: XIE, Lei, Shenzhen, Guangdong 518129 (CN)
(74) Representative: Thun, Clemens
(86) International application number: PCT/CN2007/070665
(87) International publication number: WO 2008/040214

(57) **Abstract**

A method and system for implementing interworking of messages are disclosed. The technical solution provided by the present invention uses a gateway entity to forward the messages between the SMC/MMSC and the CPM server, implementing interworking of messages between SMS/MMS users and CPM system users.

## Description

### Field of the Invention

The present invention relates to message service convergence technologies, and in particular, to a method, system, converged IP message server, and gateway for implementing interworking of messages.

### Background of the Invention

The prior message services are designed based on different architectures and platforms. Though many message services are available, their functions largely overlap and bring different experiences to users. In addition, each time when a new message service is available, a set of new service architectures and platforms need to be built. At present, the most frequently used message services include the short message service (SMS) and the multimedia message service (MMS).

SMS adopts the message store and forward mode and uses control signaling channels as the bearer channels. Thus, the information capacity is small. A short message can contain a maximum of only 140 bytes, namely, 160 characters or 70 Chinese characters. In addition to providing SMS, carriers cooperate with content providers (CPs) and service providers (SPs) to provide information/content services such as information-on-demand and information subscription services through the bearer channels of SMS, thus realizing mobile data value-added services. SMS is known for its small information capacity and simple presentation mode. After general packet radio service (GPRS) channels are introduced to GSM networks, SMS can be carried over GPRS channels. This can increase the information capacity of SMS and decrease the load of signaling channels.

The short message center (SMC) is a service processing system independent of GSM networks. The SMC is used to submit, store, and forward short messages(SMs) and interwork with public switched telephone networks (PSTNs), integrated services digital networks (ISDNs), and packet switched public data networks (PSPDNs) to transfer the SMs from other short message entities (SMEs).

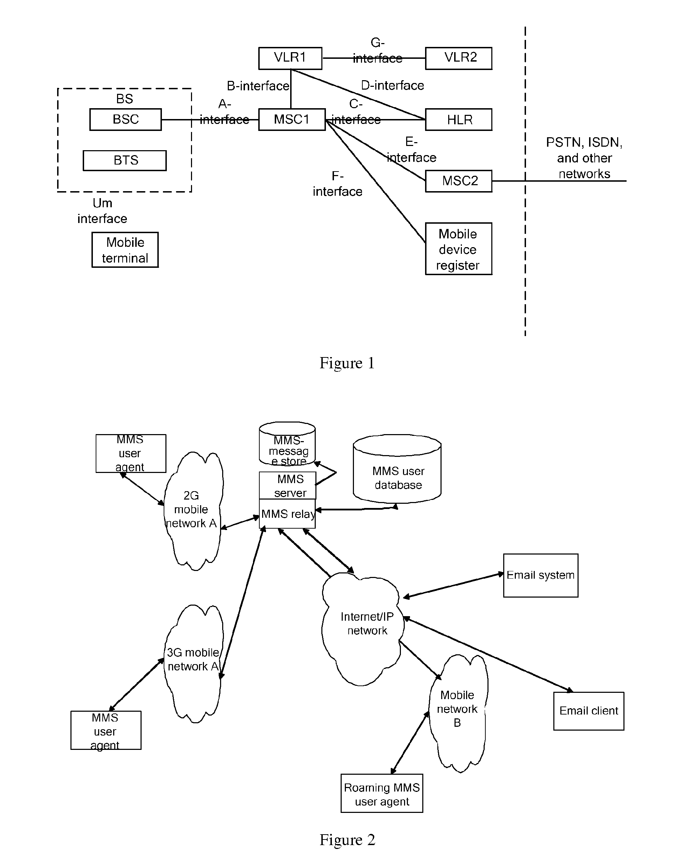

Figure 1 shows the architecture of a GSM network platform according to the prior art. The SMS system is located in MSC2. The physical entities relating to the SMS system include the mobile switching center (MSC), visitor location register (VLR), and home location register (HLR). In the SMS sending flow, these entities function as follows:
MSC: forwards the SMs received from the MS through the base station subsystem (BSS) to the corresponding SMS system, and after receiving the SMs delivered by the SMS system, queries the VLR and the HLR for routing and user information and delivers the SMs to users through the BSS.
VLR: performs authentication management before SMs are sent by users and finds user routes for the MSC when SMs are delivered.
HLR: finds the home MSC of a user before the SMS system delivers an SM and finds the basic information about the user when the MSC sends the SM.
SMS has the following features:
   (1) SMS adopts the store and forward mode. That is, an SM is not directly sent to the receiver, but stored in the SMC and then forwarded to the receiver by the SMC. Whether roaming or not, an MS can receive and send SMs. Even though the MS is powered off or beyond the radio coverage, or the SMs in the storage of the subscriber identity module (SIM) overflow, the SMC automatically stores the SMs sent to the MS, usually for up to three days, and sends the SMs when the MS is active.
   (2) SMS supports bidirectional SM transfer, that is, the MS can receive and send SMs.
   (3) After sending an SM, the sender can receive a delivery report indicating whether the SM is delivered successfully or indicating the cause of failure if the receiver is unreachable.
MMS evolutes from SMS. MMS is a service processing system independent of mobile communication networks and can be applied to 2.5G and 3G networks such as GRPS, CDMA 1X, and WCDMA networks to submit, store and forward multimedia messages (MMs). MMs can contain contents in multiple formats such as text, image, animation, video, and audio. MMS can be used in point-to-point, point-to-application, and application-to-point modes.

Figure 2 shows the structure of an MMS system according to the prior art. As shown in Figure 2, the network devices in the MMS system include an MMS relay, an MMS server, an MMS user database, and an MMS user agent.

MMS server: stores and processes the incoming and outgoing MMs. Each multimedia message service entity (MMSE) can be configured with multiple MMS servers. MMS servers can work with E-Mail servers and SMS servers in external networks through standard interfaces to provide users with rich services.

MMS relay: transfers messages between different message systems so as to forward messages between various servers in different networks without format conversion. When receiving messages from or sending messaging to another MMS user agent or another MMSE, the MMS relay can generate call detail records (CDRs). The MMS relay and the MMS server can translate addresses and store MMs temporarily to ensure that MMs are not lost before they are successfully sent to another MMSE.

MMS user database: records user-related service information, such as user service features and MMS access control.

MMS user agent: located in the user equipment or in the external equipment that is directly connected to the user equipment. The user agent is a function entity at the application layer, enabling users to browse, assemble and handle MMs. The handling of MMs includes receiving, sending and deleting MMs. The MMS user agent can also negotiate the capability of the user terminal for receiving MMs, send MM notifications to users, encrypt and decrypt MMs, support signatures of MMs between users, process the MMS-related information in the SIM card, and manage user features.

MMS is deployed on the data transmission networks based on the Wireless Application Protocol (WAP). MMS can be applied in GSM networks, GPRS networks, CDMA 1X, and future 3G networks. To obtain better bandwidth, it is recommended that MMS be applied in GPRS, CDMA 1X, 3G networks, or GSM networks where the high speed circuit switched data (HSCSD) technology is implemented.

The following describes the MMS flow, supposing the network sends an MM to the MS.
(1) Before being sent to a user, an MM is encoded based on WAP Wireless Session Protocol (WSP) and sent to the WAP gateway through the wireless network.
(2) The WAP gateway communicates with the MMS relay and sends the MM content to the MMS relay by HTTP.
(3) The MMS relay sends the MM to the MMS server. In the MMS server, the content of the MM is converted into the multimedia internet mail extensions type (MIME) and stored in the MMS-message store.
(4) The MMS server analyzes the MM to obtain the routing information and user terminal information. During the analysis, the information in the MMS user database is called. The system determines whether the user terminal can support MMS, and performs handling according to the bearer capability of the user terminal. For example, if the user terminal does not support MMS, the system removes the multimedia information from the MM and sends only the text information to the user as an SM.
(5) After determining the handling method, the system performs routing based on the mobile station international ISDN number (MSISDN) of the callee. The MMS relay communicates with external networks through the WAP gateway. Before the callee receives the information, the information is stored in the MMS-message store. Carriers can set the duration of storing messages by using software.
(6) The MMS server generates a CDR and sends it to the billing center.

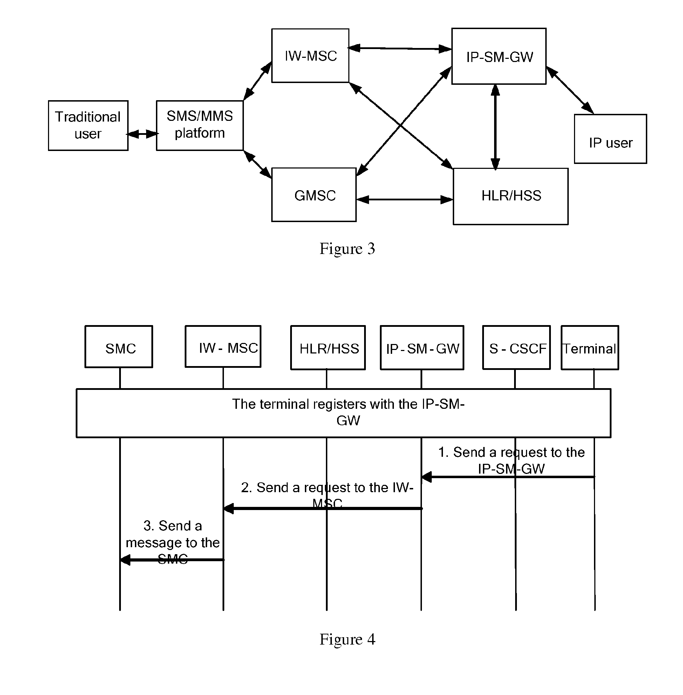

At present, messages between the traditional SMS/MMS users and the IP network users need to be transferred through the IP-SM-GW. Figure 3 shows the structure of the system for implementing message transmission between traditional users and IP users according to the prior art. The relationship between the IP-SM-GW and the SMS/MMS system is shown in Figure 3. The entities in this system function as follows:
IP user: a user in the IP network;
IP-SM-GW: a gateway that provides IP users with a function of sending messages to traditional SMS/MMS users;
HLR/HSS: a home location register/home subscriber server that is adapted to store location and right information about users;
SMS/MMS platform: a traditional SMS or MMS platform;
Interworking mobile switch center (IW-MSC): an MSC that receives the messages from the service gateway and forwards the messages to the SMC;
Gateway mobile switch center(GMSC): an MSC that receives messages from the SMC and routes the messages according to the addresses returned by the HLR/HSS; and
Traditional user: a user who uses the traditional SMS/MMS.

Figure 4 is a flowchart of an IP user sending an SM to a traditional user according to the prior art, which includes:
(1) An IP user originates a request for sending an SM to a traditional user;
(2) The IP-SM-GW responds to the request, and directly sends the request to the IW-MSC when finding that the SM is to be sent to a traditional user; and
(3) The IW-MSC sends the SM to the SMC on the SMS platform.

Figure 5 is a flowchart of a traditional user sending an SM to an IP user according to the prior art, which includes:
(1) The SMC sends the SM to the GMSC;
(2) The GMSC requests a route from the HLR/HSS according to the IP address of the receiver;
(3) The HLR/HSS finds that the receiver is an IP user and thus sends the IP address of the IP-SM-GW to the GMSC;
(4) The GMSC sends the SM to the IP-SM-GW;
(5) The IP-SM-GW sends the SM to the serving call session control function (S-CSCF); and
(6) The S-CSCF sends the SM to the IP user.

As seen from the foregoing analyses of SMS and MMS: SMS uses the signaling channels of GSM for transmission. It is impossible to transmit a great amount of data due to the limited transmission capability of signaling channels. As a result, SMS-based applications are applications with a small data amount, and cannot be deployed at will. The MMS, based on WAP, uses data channels for transmission. Though similar to the SMS in service presentation, the MMS uses the WAP event processing flow in actual implementation, which is the same as the WAP browsing or downloading mode: the receiver actively retrieves MMs from the multimedia message service center(MMSC). Therefore, the MMS has a different network structure from the SMS. At present, to use SMS/MMS, an IP user needs to register with the IP-SM-GW server so that the gateway function of the server can be used for interaction with the traditional SMS/MMS platform.

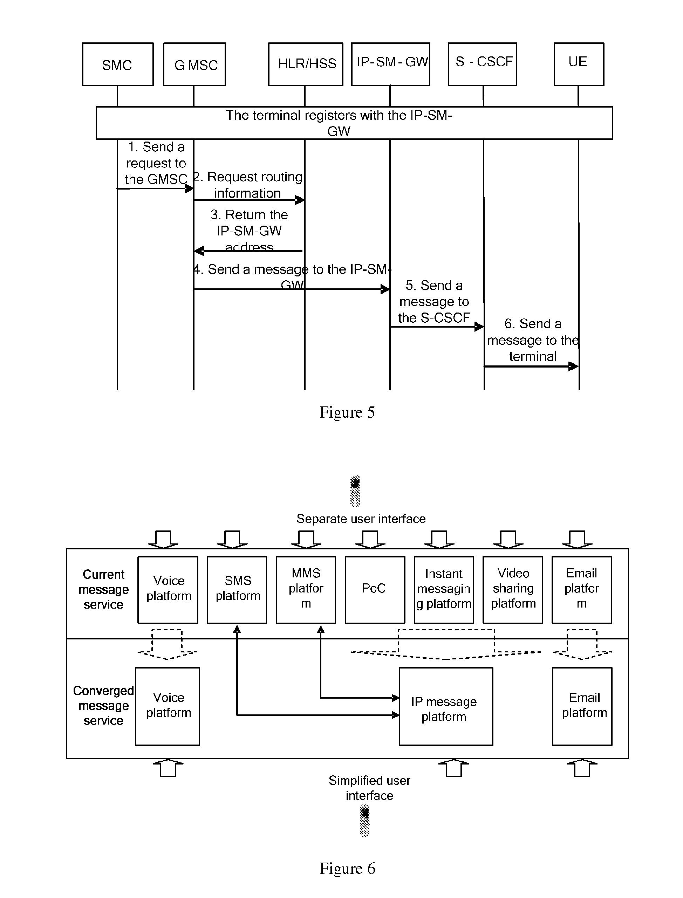

To enrich service experiences of users, to simplify the complex messaging architecture, and to separate service and platform, the Open Mobile Alliance (OMA) set up a converged IP message (CPM) workgroup. The purposes are to: provide users with converged IP message services, and based on the consolidated message service features, simplify the implementation architecture of message services, and support the smooth evolution of traditional message services. Figure 6 shows the architecture of the CPM services according to the prior art. As shown in Figure 6, the message services such as SMS and MMS can be converged in the IP message platform, so that IP users can use multiple message services through only one portal.

Though CPM provides a uniform converged message platform for IP users, traditional message systems such as SMS and MMS systems will exist for a long time, and a great number of traditional users use traditional message systems to send and receive messages. Therefore, CPM needs to be capable of interacting with traditional message systems.

A CPM service gateway subsystem can be built inside the CPM system to implement interactions with all traditional message systems, but the CPM system structure is more complex.

### Summary of the Invention

An embodiment of the present invention provides a system and method for implementing interworking of messages to implement interworking of messages between SMS/MMS users and CPM system users.

An embodiment of the present invention provides a CPM server and a gateway to implement interworking of messages between SMS/MMS users and CPM system users.

The technical solution provided by the present invention is implemented as follows:
A system for implementing interworking of messages includes:
   an SMC/MMSC, adapted to forward messages to a CPM server through a gateway entity; and/or receive the messages forwarded by the gateway entity from the CPM server;
   a CPM server, adapted to check and process messages, forward the messages to the SMC/MMSC through the gateway entity; and/or receive the messages forwarded by the gateway entity from the SMC/MMSC, and check and process the received messages; and
   a gateway entity, adapted to receive the messages from the SMC/MMSC and forward these messages to the CPM server; and/or receive the messages from the CPM server and forward these messages to the SMC/MMSC.
A method for implementing interworking of messages includes:
   sending, by a CPM server, a message to a gateway entity; and forwarding, by the gateway entity, the message to an SMC/MMSC.
   Another method for implementing interworking of messages includes:
      sending, by an SMC/MMSC, a message to a gateway entity; and forwarding, by the gateway entity, the message to a CPM server.

A CPM server includes: a CPM service gateway, a CPM public processing subsystem, and a CPM service processing subsystem, where:
the CPM service gateway is adapted to receive a message from an SMS/MMS user and send the message to the CPM public processing subsystem; receive a message from the CPM public processing subsystem and forward the message to the SMS/MMS user;
the CPM public processing subsystem is adapted to send a message from the CPM service gateway to the CPM service processing subsystem, and send the message returned by the CPM service processing subsystem to a CPM user; send a message from a CPM user to the CPM service processing subsystem, and send the message returned by the CPM service processing subsystem to the CPM service gateway; and
the CPM service processing subsystem is adapted to check the message from the CPM public processing subsystem and return the message to the CPM public processing subsystem.

A gateway provided by an embodiment of the present invention includes: an SMS/MMS processing module and a CPM processing module, where:
the SMS/MMS processing module is adapted to receive a message from the SMC/MMSC and forward the message to the CPM processing module; and/or receive a message from the CPM processing module and forward the message to the SMC/MMSC; and
the CPM processing module is adapted to receive a message from the SMS/MMS processing module and forward the message to the CPM server; and/or receive a message from the CPM server and forward the message to the SMS/MMS processing module.

As seen from the foregoing technical solution, embodiments of the present invention use a gateway entity as a forwarding interface to provide the gateway function for one or multiple CPM servers in the system, and the CPM server(s) can process and send the messages from CPM system users to the gateway entity, and process and send the messages from the gateway entity to CPM system users. This implements interworking of messages between SMS/MMS users and CPM system users.

### Brief Description of the Drawings

Figure 1 shows the architecture of the GSM network platform according to the prior art;
Figure 2 shows the architecture of the MMS system according to the prior art;
Figure 3 shows the architecture of the system for implementing message transmission between traditional users and IP users according to the prior art;
Figure 4 is a flowchart of an IP user sending an SM to a traditional user according to the prior art;
Figure 5 is a flowchart of a traditional user sending an SM to an IP user according to the prior art;
Figure 6 shows the architecture of CPM services according to the prior art;

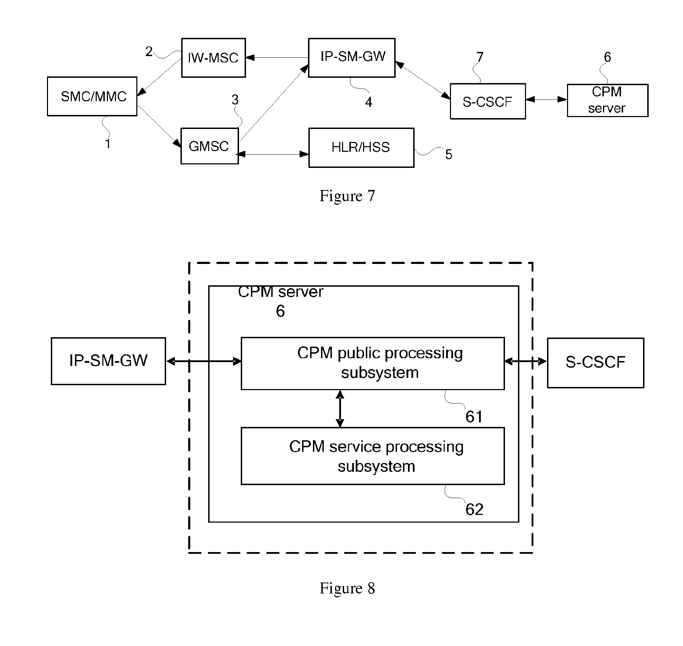

Figure 7 shows the structure of a system for implementing interworking of messages according to a first embodiment of the present invention;
Figure 8 shows the structure of the CPM server shown in Figure 7;

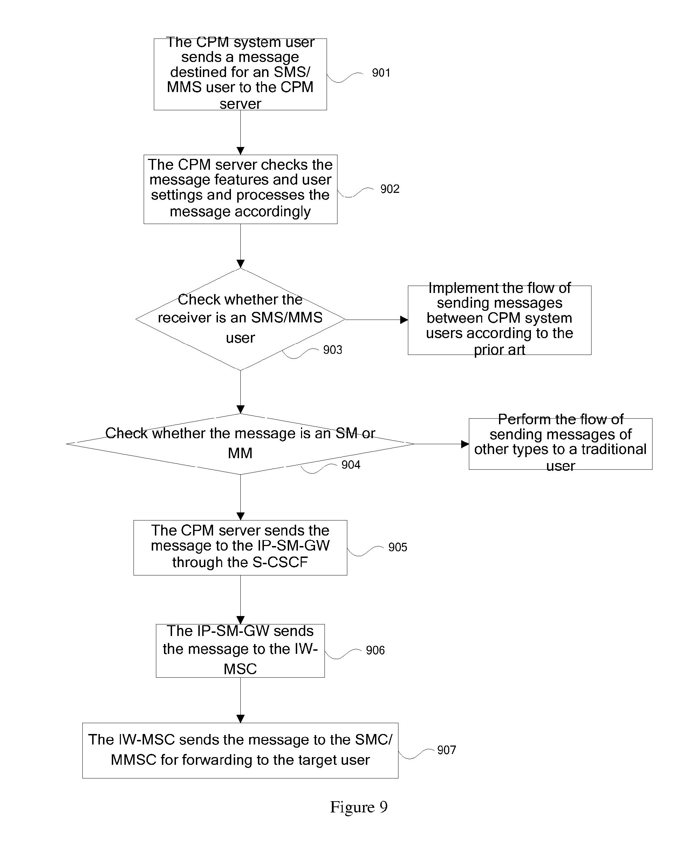

Figure 9 is a flowchart for a CPM system user to send a message to an SMS/MMS user according to the first embodiment of the present invention;

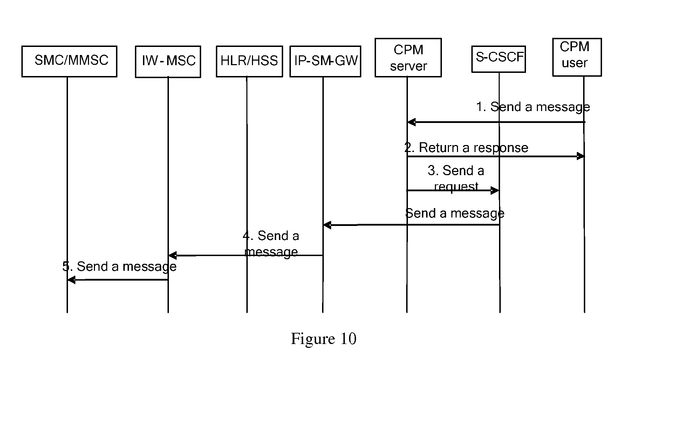

Figure 10 shows the signaling flow for a CPM system user to send a message to an SMS/MMS user according to the first embodiment of the present invention;

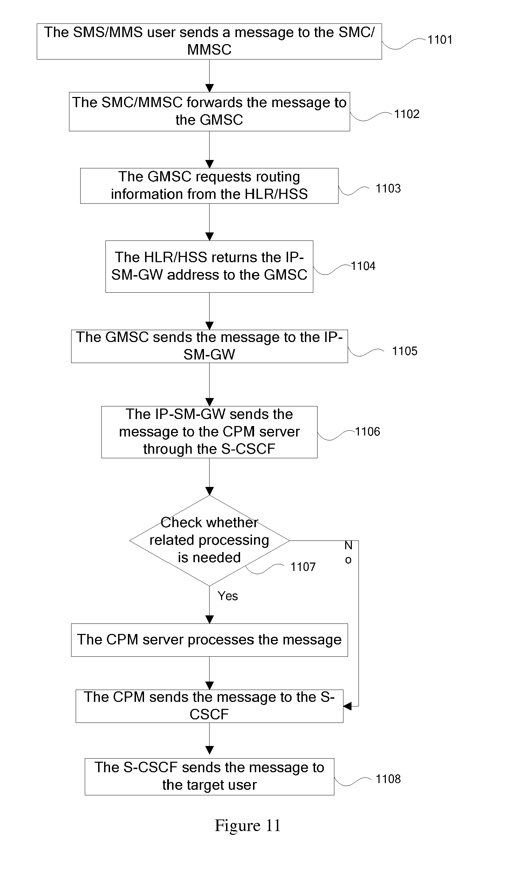

Figure 11 is a flowchart for an SMS/MMS user to send a message to a CPM system user according to the first embodiment of the present invention;

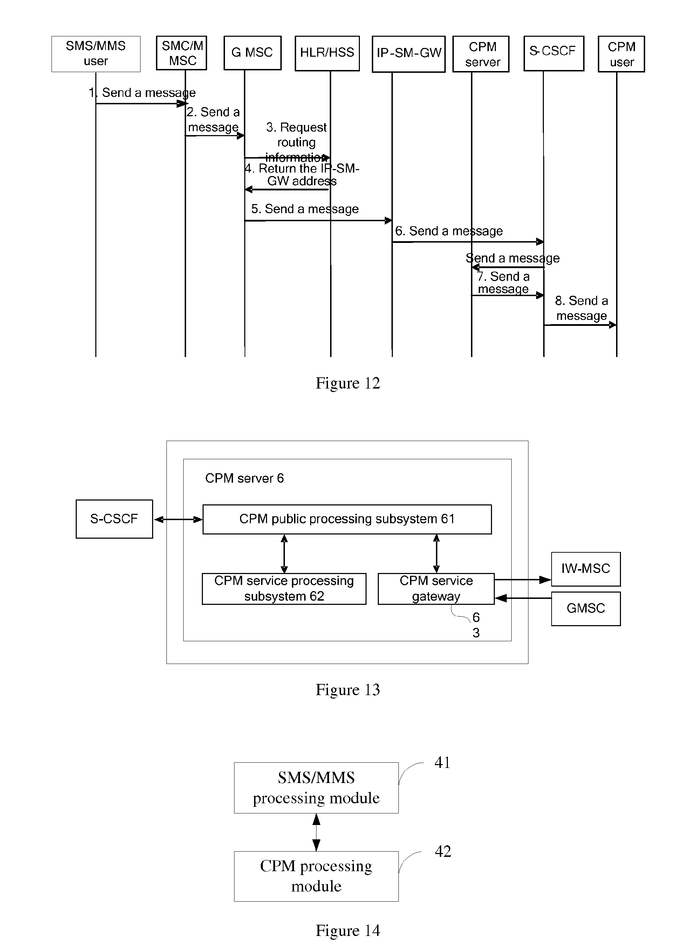

Figure 12 shows the signaling flow for an SMS/MMS user to send a message to a CPM system user according to the first embodiment of the present invention;
Figure 13 shows the structure of the integrated CPM service gateway in the CPM server according to a second embodiment of the present invention; and
Figure 14 shows the structure of a gateway according to the first embodiment of the present invention.

### Detailed Description of the Invention

The present invention is hereinafter described in detail with reference to embodiments and accompanying drawings.

According to embodiments of the present invention, a gateway entity is used as the interface between the CPM system and the SMS/MMS system to forward the messages between SMS/MMS system users and CPM system users, thus implementing interworking of messages between the SMS/MMS system and the CPM system. The gateway entity may be an existing IP-SM-GW with extended functions or a new function entity different from any existing function entity. In addition, the gateway entity may be inside or outside the CPM system, or divided into two parts: one part inside the CPM system and the other part outside the CPM system. The part outside the CPM system may be implemented through the existing IP-SM-GW, and the part inside the CPM system implements the interaction between the CPM server in the CPM system and the existing IP-SM-GW.

According to the first embodiment of the present invention, the existing IP-SM-GW with extended functions is used as a forwarding interface. The following describes the technical solution provided in the present invention, supposing the gateway entity provides the gateway function for one or multiple CPM servers in the CPM system. The CPM server can process a message from a CPM system user and then send the message to the IP-SM-GW during message sending, and can also process a message from the IP-SM-GW and then send the message to a CPM system user during message receiving. This technical solution lowers the complexity of the CPM system and makes full use of the IP-SM-GW in the existing network.

When the CPM system user sends a message to the SMS/MMS user, the CPM server in the CPM system first checks the message features and user settings, determines the message type, processes the message according to the message type (for example, removing the CPM message type identifier), requests the IP-SM-GW to trigger an initial filter rule, and then sends the message to the SMS/MMS through the IP-SM-GW.

When the SMS/MMS user sends a message to the CPM system user, the message is sent to the IP-SM-GW, and forwarded by the IP-SM-GW to the home CPM server of the receiver through the S-CSCF, and the CPM server checks the message features and user settings, processes the message accordingly, and then sends it to the receiver.

The present invention implements interworking of messages between SMS/MMS users and CPM system users, lowers the complexity of the CPM system, and makes full use of the IP-SM-GW in the existing network.

### Embodiment 1:

Figure 7 shows the structure of a system for implementing interworking of messages according to the first embodiment of the present invention. The system includes at least:
an SMC/MMSC 1, adapted to forward the messages from SMS/MMS users to a CPM server 6 through an IP-SM-GW 4, receive the messages forwarded by the IP-SM-GW 4 from the CPM server 6 and forward these messages to SMS/MMS users;
a CPM server 6, adapted to receive messages from CPM users, check and process the messages, and then forward the messages to the SMC/MMSC 1 through the IP-SM-GW 4; receive the messages forwarded by the IP-SM-GW 4 from the SMC/MMSC 1, check and process the messages, and forward the messages to CPM users; and
an IP-SM-GW 4, adapted to receive the messages from the SMC/MMSC 1 and forward the messages to the CPM server 6; receive the messages from the CPM server 6 and forward the messages to the SMC/MMSC 1. The IP-SM-GW 4 works as a gateway in the system and provides an interface for forwarding the messages between the CPM system and the SMS/MMS system to implement interworking of the messages between them.

According to this embodiment, the IP-SM-GW 4 is an IP-SM-GW with extended functions to implement the interaction with the CPM server 6.

The system may further include:
an IW-MSC 2, adapted to forward the messages sent by the CPM server from the IP-SM-GW 4 to the SMC/MMSC 1;
a GMSC 3, adapted to receive the messages from the SMC/MMSC 1 and forward the messages to the IP-SM-GW 4; and
a S-CSCF 7, adapted to forward the messages from the CPM server 6 to the IP-SM-GW 4 and forward the messages sent by SMS/MMS users from the IP-SM-GW 4 to the CPM server 6.

The system may further include:
an HLR/HSS 5, adapted to provide the routing information about the messages from SMS/MMS users for the GMSC 3 as requested by the GMSC 3.

Figure 8 shows the structure of the CPM server shown in Figure 7. As shown in Figure 8, the CPM server 6 shown in Figure 7 includes:
a CPM public processing subsystem 61, as the public interface of the CPM server 6, adapted to forward the received messages to a CPM service processing subsystem 62;
a CPM service processing subsystem 62, adapted to check and process messages, specifically, checking the message features and user settings of the received messages and adding a CPM type identifier to the messages or removing the CPM type identifier from the messages. The check and processing are intended to screen the differences in message formats of the CPM system and SMS/MMS system to implement interworking of messages between these two systems. For example, a message sent by a CPM system user contains the CPM message type identifier which cannot be identified by the SMS/MMS system, so the identifier should be added to or removed from the messages between these two systems. In addition, when a CPM system user wants to send a message to an SMS/MMS user in the format of a short message but the message contains multimedia content, the multimedia content needs to be deleted from the message.

Figure 9 is a flowchart of the method for a CPM system user to send a message to an SMS/MMS user according to the first embodiment of the present invention. The method includes:
Step 901: The CPM system user sends a message destined for an SMS/MMS user to the CPM server 6.
Step 902: The CPM server 6 responds, checks the features and user settings of the message, and processes the message accordingly.

The messages sent by CPM system users are often sent through the Session Initiation Protocol (SIP). CPM system users sometimes can confirm the type of the messages sent with the CPM server 6 through negotiation. For example, a bit can be added to the SIP header to indicate the message type (when the bit is 0, the message is a multimedia message; when the bit is any other value, the message is an ordinary message, or vice versa). The CPM server 6 checks the user settings of a message to find out the message type. However, users sometimes do not set this bit. In this case, the CPM server 6 needs to check the message features to find out the message type. For example, if a message contains multimedia files, the CPM server 6 determines that the message is a multimedia message.

It is still possible that a message of the CPM system user is set as an ordinary text SM but also contains multimedia content. In this case, the CPM server 6 needs to remove the multimedia content of the message such as audio and video. In addition, the CPM server 6 needs to remove the CPM message type identifier which is available only in CPM systems.

Step 903: The CPM server 6 queries the database based on the destination address of the message to determine whether the receiver is an SMS/MMS user. If yes, the CPM server 6 performs step 904; otherwise, the CPM server 6 performs the flow of message transfer between CPM system users according to the prior art.

Step 904: The CPM server 6 determines whether the message is an SM or a multimedia message according to the message type obtained in step 902. If the message is a multimedia message, the CPM server 6 performs step 905; if the message is an SM, the CPM server 6 performs the flow of sending messages of other types to a traditional user.

Step 905: The CPM server 6 requests the S-CSCF 7 to trigger an initial filter rule and sends the message to the IP-SM-GW 4 through the S-CSCF 7. The initial filter rule is a state machine, that is, certain actions are performed when certain conditions are met. For example, when a message is sent by a CPM system user to an SMS/MMS user, the S-CSCF sends the message to the IP-SM-GW 4.

Step 906: The IP-SM-GW 4 sends the message to the IW-MSC 2.

Step 907: The IW-MSC 2 sends the message to the SMC/MMSC 1, and the SMC/MMSC 1 sends the message the target user.

Figure 10 shows the signaling flow for a CPM system user to send a message to an SMS/MMS user according to the first embodiment of the present invention. The flow includes:
1. The CPM system user sends a message destined for an SMS/MMS user to the CPM server 6.
2. The CPM server 6 responds to the CPM system user.
3. The CPM server 6 requests the S-CSCF 7 to trigger an initial filter rule and sends the message to the IP-SM-GW 4 through the S-CSCF 7.
4. The IP-SM-GW 4 sends the message to the IW-MSC 2.
5. The IW-MSC 2 sends the message to the SMC/MMSC 1.

Figure 11 is a flowchart of the method for an SMS/MMS user to send a message to a CPM system user according to the first embodiment of the present invention. The method includes:
Step 1101: The SMS/MMS user sends a message to the SMC/MMSC 1.
Step 1102: The SMC/MMSC 1 forwards the message to the GMSC 3.
Step 1103: The GMSC 3 requests routing information from the HLR/HSS 5 according to the destination address of the message.
Step 1104: The HLR/HSS 5 returns the address of the IP-SM-GW 4 to the GMSC 3.
Step 1105: The GMSC 3 sends the message to the IP-SM-GW 4.
Step 1106: The IP-SM-GW 4 requests the S-CSCF 7 to trigger an initial filter rule and sends the message to the CPM server 6 through the S-CSCF 7. The initial filter rule means that the S-CSCF 7 sends the message to the CPM server 6 when finding that the message is sent from an SMS/MMS user to a CPM system user.
Step 1107: The CPM server 6 checks the message features and the user settings of the receiver, decides whether to process the message based on the message type, and sends the message to the S-CSCF 7. The messages sent by CPM system users are often sent through SIP. Sometimes CPM system users can confirm the type of the sent messages with the CPM server 6 through negotiation. In this case, the CPM server 6 needs to check the user settings of the receiver. If the receiver wants to set the corresponding bit, the CPM server 6 needs to set the bit in the SIP header according to the message type, so that the receiver can know the message type.

In addition, different users may have some different settings. For example, if a user does not want to receive multimedia messages, the CPM server 6 needs to convert the multimedia messages sent to the user into ordinary text messages.

In addition, the CPM server 6 needs to add the CPM message type identifier to the messages.

After processing the message according to user settings, the CPM server 6 sends the message to the S-CSCF 7.

Step 1108: The S-CSCF 7 sends the message to the target user.

Figure 12 shows the signaling flow for an SMS/MMS user to send a message to a CPM system user according to the first embodiment of the present invention. The flow includes:
1. The SMS/MMS user sends a message destined for a CPM system user to the SMC/MMSC 1.
2. The SMC/MMSC 1 forwards the message to the GMSC 3.
3. The GMSC 3 requests routing information from the HLR/HSS 5.
4. The HLR/HSS 5 returns the address of the IP-SM-GW 4 to the GMSC 3.
5. The GMSC 3 sends the message to the IP-SM-GW 4.
6. The IP-SM-GW 4 requests the S-CSCF 7 to trigger an initial filter rule and sends the message to the CPM server 6 through the S-CSCF 7.
7. The CPM server 6 sends the message to the S-CSCF 7.
8. The S-CSCF 7 sends the message to the target CPM system user.

### Embodiment 2:

Figure 13 shows the structure of the integrated CPM service gateway in the CPM server according to the second embodiment of the present invention. According to the embodiment shown in Figure 13, a CPM service gateway 63 is integrated inside the CPM server to implement the IP-SM-GW 4 provided by the first embodiment, such as receiving the messages from the GMSC 3 and forwarding these messages to the CPM public processing subsystem 61 in the CPM server 6; receiving the messages from the CPM public processing subsystem 61 in the CPM server 6 and forwarding these messages to the IW-MSC 2.

When a CPM system user sends a message to an SMS/MMS user: the CPM public processing subsystem 61 in the CPM server 6 sends the message to the CPM service processing subsystem 62; the CPM service processing subsystem 62 checks the message features and user settings to determine the message type, processes the message accordingly, for example, removing the CPM type identifier, and then sends the message to the CPM public processing subsystem 61; the CPM public processing subsystem 61 sends the message to the SMS/MMS through the added CPM service gateway 63.

When an SMS/MMS user sends a message to a CPM system user, the message is first sent to the CPM service gateway 63. The CPM service gateway 63 sends the message to the CPM service processing subsystem 62 through the CPM public processing subsystem 61. The CPM service processing subsystem 62 checks the message features and user settings, processes the message accordingly, and then sends the message to the target user through the CPM public processing subsystem 61.

The technical solution provided in this embodiment is to integrate the CPM service gateway 63 that is newly added as an interface to implement the IP-SM-GW functions. In this way, interworking of messages between SMS/MMS users and CPM system users can be implemented without an IP-SM-GW. The functions of the other devices in the system shown in Figure 13 are the same as those of the devices described in the first embodiment.

The added CPM service gateway 63 may be in the CPM system, independent of the CPM server 6. In this case, the CPM service gateway 63 has the same functions described above.

The added CPM service gateway 63 may also be independent of the CPM system. In this case, the message forwarding and processing are the same as those described in the first embodiment except that the IP-SM-GW4 is replaced by the added CPM service gateway 63.

### Embodiment 3:

The gateway entity that serves as an interface between the SMS/MMS system and the CPM system may be divided into two parts: one is outside the CPM system, and the other one is inside the CPM system. The part outside the CPM system may be implemented through the existing IP-SM-GW. The part inside the CPM system implements interworking of messages between the CPM server in the CPM system and the existing IP-SM-GW.

Figure 14 shows the structure of a gateway according to an embodiment of the present invention. As shown in Figure 14, the gateway includes: an SMS/MMS processing module 41 and a CPM processing module 42.

The SMS/MMS processing module 41 is adapted to receive a message from the SMC/MMSC and forward the message to the CPM processing module 42; receive a message from the CPM processing module 42 and forward the message to the SMC/MMSC.

The CPM processing module 42 is adapted to receive a message from the SMS/MMS processing module 41 and forward the message to the CPM server; and receive a message from the CPM server and forward the message to the SMS/MMS processing module 41.

As shown in Figure 14, the CPM processing module 41 may be located in the CPM system.

To sum up, embodiments of the present invention use a gateway entity as a forwarding interface to provide the gateway function for one or multiple CPM servers in the system, and the CPM server(s) can process and send the messages from CPM system users to the gateway entity, and process and send the messages from the gateway entity to CPM system users. This implements interworking of messages between SMS/MMS users and CPM system users.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A system for implementing interworking of messages, comprising:
a short message center/ multimedia message service center (SMC/MMSC), adapted to forward messages to a converged IP message (CPM) server through a gateway entity; and/or receive the messages forwarded by the gateway entity from the CPM server;
the CPM server, adapted to check and process the messages, forward the messages to the SMC/MMSC through the gateway entity; and/or receive the messages forwarded by the gateway entity from the SMC/MMSC, and check and process the received messages; and
the gateway entity, adapted to receive the messages from the SMC/MMSC and forward these messages to the CPM server; and/or receive the messages from the CPM server and forward these messages to the SMC/MMSC.

2. The system according to claim 1, further comprising:
an interworking mobile switch center (IW-MSC), adapted to forward the messages sent by the CPM server from the gateway entity to the SMC/MMSC;
a gateway mobile switch center(GMSC), adapted to receive the messages from the SMC/MMSC and forward the messages to the gateway entity; and
a serving call session control function(S-CSCF), adapted to forward the messages from the CPM server to the gateway entity and forward the messages from the gateway entity to the CPM server.

3. The system according to claim 2, further comprising: a home location register/home subscriber server(HLR/HSS), adapted to provide the routing information about the messages for the GMSC as requested by the GMSC; wherein
the GMSC is adapted to forward the messages from the SMC/MMSC to the gateway entity according to the routing information provided by the HLR/HSS.

4. The system according to claim 1, 2 or 3, wherein the CPM server comprises:
a CPM public processing subsystem being a public interface of the CPM server, adapted to forward the received messages to a CPM service processing subsystem; and
a CPM service processing subsystem, adapted to check and process the messages.

5. The system according to claim 4, wherein a CPM service processing subsystem, adapted to check and process the messages comprises:
the CPM service processing subsystem checking the message features and user settings of the received messages and adding a CPM type identifier to the messages or removing the CPM type identifier from the messages.

6. The system according to any one of claims 1 to 5, wherein
the gateway entity is the CPM service gateway, the CPM service gateway is in the CPM server, or in the CPM system independent of the CPM server or out of the the CPM system; or
the gateway entity is IP-SM-GW with extended functions; or
the gateway entity includes two parts: one is the existing IP-SM-GW outside the CPM system, and the other one is inside the CPM system, implementing interworking of messages between the CPM server in the CPM system and the existing IP-SM-GW.

7. A method for implementing interworking of messages, comprising:
sending, by a CPM server, a message to a gateway entity; and
forwarding, by the gateway entity, the message to an SMC/MMSC.

8. The method according to claim 7, wherein, before the process of sending, by a CPM server, a message to a gateway entity, the method further comprises:
sending, by the CPM system user, a message destined for an SMS/MMS user to the CPM server; and
responding and checking, by the CPM server, the features and user settings of the message, and processing the message accordingly.

9. The method according to claim 8, wherein the process of responding and checking, by the CPM server, the features and user settings of the message comprises:
checking, by the CPM server, the destination address of the message to determine whether the receiver is a CPM system user; if yes, performing the following step; otherwise, terminating the process;
checking, by the CPM server, the message type and the user settings and determining whether the message is an SM or a multimedia message, if yes, performing the following step; otherwise, terminating the process.

10. The method according to claim 8, wherein the process of processing, by the CPM server, the message accordingly comprises:
removing, by the CPM server, the CPM message type identifier of the message, and if the message is an SM, removing the multimedia content.

11. The method according to any one of claim 7 to claim 10, wherein the process of forwarding, by the gateway entity, the message to an SMC/MMSC comprises:
sending, by the gateway entity, the message to the IW-MSC ; and
sending, by the IW-MSC, the message to the SMC/MMSC, and sending, by the SMC/MMSC, the message to the target user.

12. A method for implementing interworking of messages includes:
sending, by an SMC/MMSC, a message to a gateway entity; and forwarding, by the gateway entity, the message to a CPM server.

13. The method according to claim 12, wherein the process of sending, by an SMC/MMSC, a message to a gateway entity comprises:
sending, by the SMS/MMS user, a message to the SMC/MMSC;
forwarding, by the SMC/MMSC, the message to a GMSC;
requesting, by the GMSC, routing information from an HLR/HSS according to the destination address of the message;
returning, by the HLR/HSS, the address of the gateway entity to the GMSC; and
sending, by the GMSC, the message to the gateway entity.

14. The method according to claim 12 or 13, wherein after the process of forwarding, by the gateway entity, the message to a CPM server, the method further comprises:
checking, by the CPM server, the message features and the user settings of the receiver, processing the message accordingly, and sending the message to the S-CSCF ; and
sending, by the S-CSCF, the message to the target user.

15. The method according to claim 14, wherein the process of checking, by the CPM server, the message features and the user settings of the receiver comprises:
checking, by the CPM server, the media content type of the message and the message type set by the user, and determining whether the message is SM or multimedia message.

16. The method according to claim 14 or 15, wherein the process of processing, by the CPM server, the message comprises:
adding, by the CPM server, a CPM type identifier to the message.

17. A CPM server, comprising: a CPM service gateway, a CPM public processing subsystem, and a CPM service processing subsystem, wherein:
the CPM service gateway is adapted to receive a message from an SMS/MMS user and send the message to the CPM public processing subsystem; and/or receive a message from the CPM public processing subsystem and forward the message to the SMS/MMS user;
the CPM public processing subsystem is adapted to send a message from the CPM service gateway to the CPM service processing subsystem, and send the message returned by the CPM service processing subsystem to a CPM user; and/or send a message from a CPM user to the CPM service processing subsystem, and send the message returned by the CPM service processing subsystem to the CPM service gateway; and
the CPM service processing subsystem is adapted to check the message from the CPM public processing subsystem and return the message to the CPM public processing subsystem.

18. A gateway, comprising an SMS/MMS processing module and a CPM processing module, wherein:
the SMS/MMS processing module is adapted to receive a message from the SMC/MMSC and forward the message to the CPM processing module; and/or receive a message from the CPM processing module and forward the message to the SMC/MMSC; and
the CPM processing module is adapted to receive a message from the SMS/MMS processing module and forward the message to the CPM server; and/or receive a message from the CPM server and forward the message to the SMS/MMS processing module.

19. The gateway according to claim 18, wherein the CPM processing module is located in the CPM system.
